# EUROPEAN PATENT SPECIFICATION

(11) **EP 4 631 715 B1**
(45) Date of publication and mention of the grant of the patent: **04.11.2026**
(21) Application number: 25168220.9
(22) Date of filing: 03.04.2025
(51) Int. Cl.: B32B 5/02, B32B 5/26, B32B 7/12

(54) **MESH MEMBER ASSEMBLY AND METHOD OF MANUFACTURE**
GITTERELEMENTANORDNUNG UND VERFAHREN ZUR HERSTELLUNG
ENSEMBLE D'ÉLÉMENTS DE MAILLE ET PROCÉDÉ DE FABRICATION

(30) Priority: 11.04.2024 US 202463632837 P; 21.02.2025 US 202519059469
(43) Date of publication of application: 15.10.2025
(73) Proprietor: Lear Corporation, Southfield, MI 48033 (US)
(72) Inventor: Hale, David, Northville, MI, 48168 (US); Duncan, Bradley C., Harrison Township, MI, 48045 (US); Liu, Haifeng, Novi, MI, 48374 (US)
(74) Representative: Grünecker Patent- und Rechtsanwälte PartG mbB

(56) References cited:
- EP-B1- 2 635 732
- US-A1- 2018 142 387

## Description

### CROSS-REFERENCE TO RELATED APPLICATIONS

This application claims the benefit of U.S. provisional application serial no. 63/632,837, filed April 11, 2024.

### TECHNICAL FIELD

This relates to a mesh member assembly and a method of manufacture. US 2018/142387 A1 discloses a nonwoven composite and a process for forming it.

### BRIEF DESCRIPTION OF THE DRAWINGS

Figure 1 is a perspective view of an example of a seat assembly.
Figure 2 is a perspective view of an example of a cushion of the seat assembly that is a mesh member assembly that comprises a filament mesh structure.
Figure 3 is schematic view of an example of a manufacturing system for making the filament mesh structure.
Figure 4 is an exploded view of an example of a mold assembly and an example of a mesh member assembly.
Figure 5 is a perspective view of an example of adhesive having a rod configuration that may be provided with the mesh member assembly.
Figure 6 is a perspective view of an example of adhesive having a net configuration that may be provided with the mesh member assembly.
Figure 7 is a flowchart of an example of a method of manufacture of the mesh member assembly.
Figure 8 is a section view of the mold assembly in an open position and the first and second mesh members before being shaped and adhered in the mold assembly.
Figure 9 is a section view of the mold assembly of Figure 8 in a closed position with the first and second members being shaped and adhered with the adhesive in the mold assembly.
Figure 10 is a section view of the mold assembly of Figure 8 in the open position and an example of the mesh member assembly.
Figure 11 is a magnified view of a portion of Figure 10.
Figure 12 is a section view of the mold assembly in an open position and first and second mesh members comprising skins before being shaped and adhered in the mold assembly.
Figure 13 is a section view of the mold assembly of Figure 12 in a closed position with the first and second members being shaped and adhered to the skins in the mold assembly.
Figure 14 is a section view of the mold assembly of Figure 12 in the open position and an example of the mesh member assembly.
Figure 15 is a magnified view of a portion of Figure 14.
Figure 16 is another example of a section view of the mold assembly in an open position and first and second mesh members comprising skins before being shaped and adhered in the mold assembly.
Figure 17 is a section view of the mold assembly of Figure 16 in a closed position with the first and second members being shaped and adhered in the mold assembly.
Figure 18 is a section view of the mold assembly of Figure 16 in the open position and an example of the mesh member assembly.
Figure 19 is a magnified view of a portion of Figure 18.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

It is to be understood that the disclosed embodiments are merely exemplary and that various and alternative forms are possible. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ embodiments according to the disclosure.

"One or more" includes a function being performed by one element, a function being performed by more than one element, *e.g.,* in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a" and "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising" when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

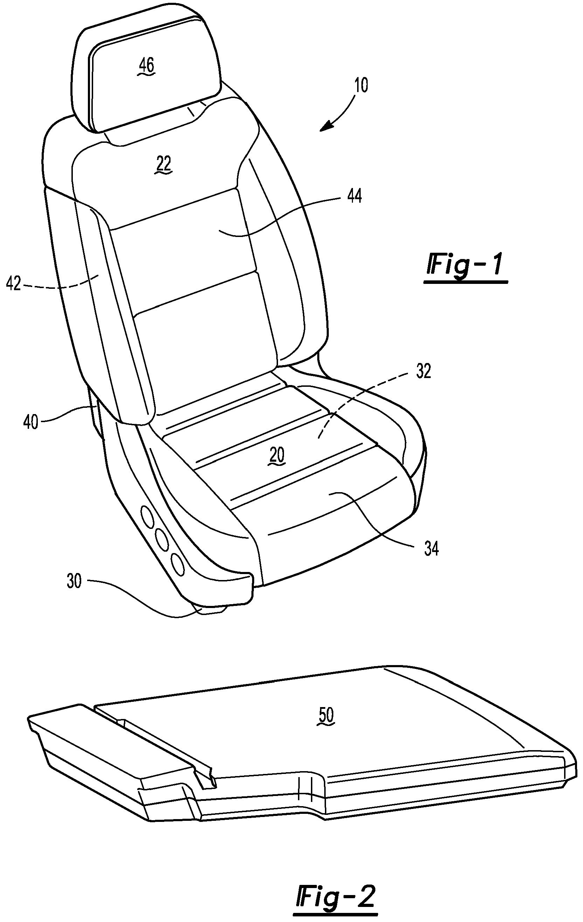

Referring to Figure 1, an example of a seat assembly 10 is shown. In some embodiments, the seat assembly 10 is a vehicle seat assembly, such as for a land vehicle like a car, truck, bus, or the like, or for a non-land vehicle like aircraft or watercraft. For example, a seat assembly 10 for a land vehicle may be shaped and sized as a front row driver or passenger seat, a second, third, or other rear row seat, and may include bucket-style seats, bench-style seats, or other seat styles. Furthermore, the seat assembly 10 may be a non-stowable seat or a stowable seat that may be foldable and stowable in a cavity in the vehicle floor. Additionally, the seat assembly 10 may be configured for non-vehicle applications such as furniture.

In the configuration shown in Figure 1, the seat assembly 10 includes a seat bottom 20 and a seat back 22. It is contemplated that the seat back 22 may be omitted in some configurations, such as when the seat assembly 10 is configured as a motorcycle seat or stool.

The seat bottom 20 is configured to receive a seated occupant and support the pelvis and thighs of the seat occupant. The seat bottom 20 includes a seat bottom frame 30, a cushion 32, and a trim cover 34.

The seat bottom frame 30 is a structure that supports the cushion 32. The seat bottom frame 30 includes one or more structural members and may be made of any suitable material, such as a metal alloy, polymeric material, fiber reinforced polymeric material, or combinations thereof. In some configurations, the seat bottom frame 30 includes a panel, seat pan, suspension mat, or suspension wires upon which the cushion 32 is disposed.

The cushion 32 is disposed on the seat bottom frame 30. The cushion 32 is made of a compliant material that supports the seat occupant and distributes load forces from the seat occupant to the seat bottom frame 30. The cushion 32 and associated methods of manufacture will be discussed in more detail below.

The trim cover 34 covers at least a portion of the cushion 32. In addition, the trim cover 34 provides one or more visible exterior surfaces of the seat back 22. The seat occupant may be disposed on the trim cover 34 when seated upon the seat assembly 10. The trim cover 34 is made of any suitable material or materials, such as fabric, leather, leatherette, vinyl, or combinations thereof. The trim cover 34 may include a plurality of trim panels that are assembled in any suitable manner, such as by fusing or stitching. The trim cover 34 is attached to the seat bottom frame 30, the cushion 32, or both. For example, the trim cover 34 may include trim attachment features that are attached to the seat bottom frame 30, the cushion 32, or both, to inhibit removal of the trim cover 34 and help conform the trim cover 34 to the contour of the seat bottom frame 30, the cushion 32, or both. The trim cover 34 may also be attached to an attachment pad.

The seat back 22 is configured to support the back of a seated occupant. The seat back 22 is disposed adjacent to the seat bottom 20. For example, the seat back 22 may be disposed above the seat bottom 20 and near the rear side of the seat bottom 20. The seat back 22 extends in a generally upward direction away from the seat bottom 20. In some configurations, the seat back 22 is mounted to the seat bottom 20 and may be pivotable with respect to the seat bottom 20. In other configurations, the seat back 22 is not mounted to the seat bottom 20. For instance, a vehicle seat back may be mounted to the vehicle body structure, such as in some second row seat assemblies. The seat back 22 includes a seat back frame 40, a cushion 42, a trim cover 44, and optionally a head restraint 46.

The seat back frame 40 is a structure that supports the cushion 42. The seat back frame 40 includes one or more structural members and may be made of any suitable material, such as a metal alloy, polymeric material, fiber reinforced polymeric material, or combinations thereof. In some configurations, the seat back frame 40 includes a panel, pan, suspension mat, or suspension wires upon which the cushion 42 is disposed. It is also contemplated that the seat back frame 40 may be integrally formed with the seat bottom frame 30 in some configurations.

The cushion 42 is disposed on the seat back frame 40. The cushion 42 is made of a compliant material that supports the seat occupant and distributes load forces from the seat occupant to the seat back frame 40. It is contemplated that the cushion 42 may be integrally formed with the cushion 32 of the seat bottom 20 or may be separate from the cushion 32 of the seat bottom 20. The cushion 42 and associated methods of manufacture will be discussed in more detail below.

The trim cover 44 covers at least a portion of the cushion 42. In addition, the trim cover 44 provides one or more visible exterior surfaces of the seat back 22. The seat occupant may be disposed on the trim cover 44 when seated upon the seat assembly 10. The trim cover 44 is made of any suitable material or materials, such as fabric, leather, leatherette, vinyl, or combinations thereof. The trim cover 44 may include one trim panel or a plurality of trim panels that are assembled in any suitable manner, such as by fusing or stitching. The trim cover 44 is attached to the seat back frame 40, the cushion 42, or both. For example, the trim cover 44 may include trim attachment features that are attached to the seat back frame 40, the cushion 42, or both, to inhibit removal of the trim cover 44 and help conform the trim cover 44 to the contour of the seat back frame 40, the cushion 42, or both. The trim cover 44 may also be attached to an attachment pad.

The head restraint 46, if provided, is configured to support the head of a seat occupant. The head restraint 46 is disposed at the top of the seat back 22 or at an end of the seat back 22 that is disposed opposite the seat bottom 20. The head restraint 46 may be moveable in one or more directions with respect to the seat back 22 or may be integrally formed with the seat back 22.

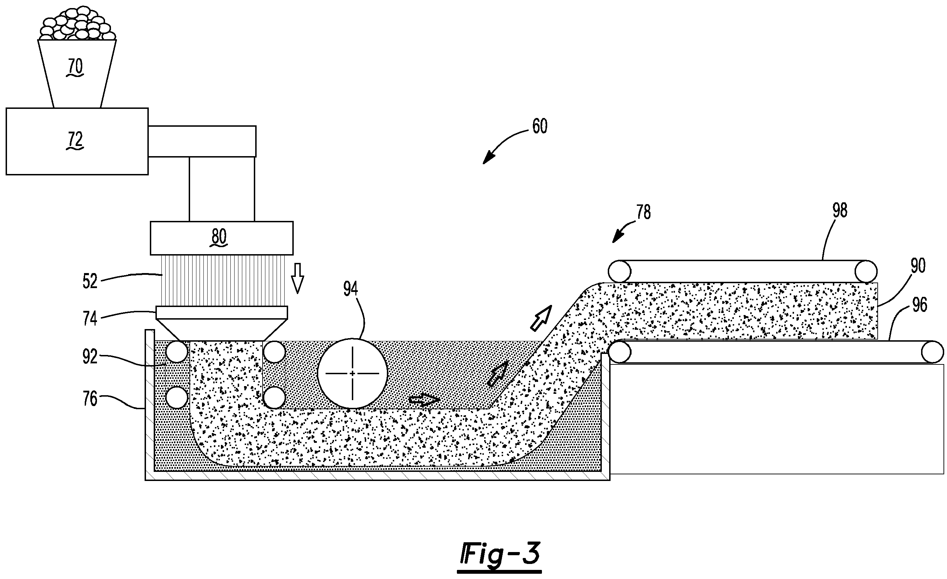

Referring to Figure 3, an example of a cushion 50 is shown. The cushion in generically designated with reference number 50 for convenience in reference. It is to be understood that the structure and description of the cushion 50 is applicable to the cushion 32 of the seat bottom 20, the cushion 42 of the seat back 22, or both.

The cushion 50 is a non-foam component or includes at least one non-foam component. The non-foam component is primarily referred to as a mesh member but may also be referred to as a stranded member, looped member, entangled member, filament mesh structure, mesh structure, stranded mesh, looped mesh, entangled mesh, or mesh cushion. In Figure 3, the cushion 50 is depicted as a non-foam component that does not include a foam component or foam material, such as urethane or polyurethane foam; however, it is contemplated that the cushion 50 may also include a foam component or foam material in addition to a non-foam component to provide additional cushioning or localized cushioning for a seat occupant. For example, foam material may be provided between the cushion 50 and a trim cover (e.g., trim cover 34, 44) that is disposed on the cushion 50, within the cushion 50, or combinations thereof. Reducing the amount of foam material that is provided with the cushion 50 or eliminating foam material from the cushion 50 reduces weight and may improve support and comfort of a seat occupant. In addition, eliminating foam material may facilitate recycling of the cushion 50.

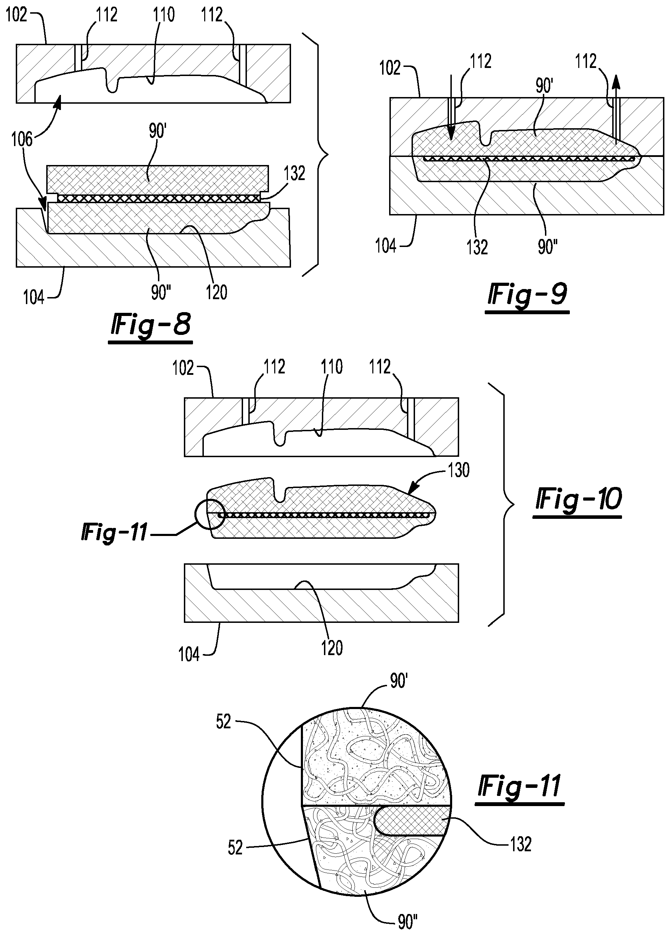

The cushion 50 is described below in the context of a cushion 50 that does not include foam material. In this context, the cushion 50 is made of filaments 52 of polymeric material that are randomly looped, bent, curled, or entangled and are bonded together as will be discussed in more detail below. An example of filaments 52 as part of a cushion is shown in Figure 11. A filament 52 is directly bonded to another filament 52 rather than being indirectly bonded with a resin or other intermediate material.

The filaments 52, which may also be referred to as strands or threads, are made of any suitable material or materials. In some configurations, the filaments 52 are made of a polymeric material or thermoplastic material, such as a thermoplastic resin that is polyamide-based, polyester-based, polyimide-based, polyolefin-based (e.g., polypropylene-based, polyethylene-based, etc.), polystyrene-based, or combinations thereof. As one example, a polyethylene-based filament may be made of linear low-density polyethylene (LLDPE). The filament material may be recyclable unlike foam material or more easily recycled than foam material. It is also contemplated that a filament 52 may comprise reinforcement fibers and that the reinforcement fibers may not be made of a thermoplastic material.

In some configurations, a filament 52 may be a monofilament that is made of a single material. In some configurations, a filament 52 is made of multiple materials. As an example, a filament 52 made of multiple materials may include a core that is made of a first thermoplastic material and a sheath that encircles the core and is made of a second thermoplastic material that differs from the first thermoplastic material. It is contemplated that the cushion 50 may include a combination of monofilaments and filaments that are made of multiple materials and are not monofilaments.

Filaments 52 that are randomly looped, bent, looped, curled, or entangled are bonded together where one filament 52 contacts another filament 52, thereby resulting in a lightweight, air permeable cushion (e.g., cushion 32 and/or 42) or mesh structure having openings or voids between the filaments 52. An example of a manufacturing system 60 of making a cushion or filament mesh structure is also shown in Figure 3. In this example, the manufacturing system 60 includes a material supply 70, an extruder 72, and a funnel 74. The manufacturing system 60 also includes a cooling tank 76 and a material handling subsystem 78.

Referring to Figure 3, the material supply 70 holds material stock that is to be extruded, such as solid beads, flakes, granules, pellets, or powder made of the material. In some configurations, the material supply 70 is configured as a container or hopper. The material supply 70 provides material stock to the extruder 72.

The extruder 72 melts the material stock and extrudes the material stock into a set of filaments 52. The extruder 72 may have any suitable configuration. In some configurations, the extruder 72 includes a barrel that receives a rotatable screw and heating elements. Rotation of the screw forces the material to move through the barrel and helps heat the material due to the friction generated as the screw rotates. The material exits the barrel under pressure and in a molten state and is transported under pressure to a die 80 of the extruder 72.

The die 80, which may also be referred to as a die plate or extrusion die, has multiple through holes or filament forming openings through which the molten material passes. A single filament 52 is extruded from each through hole. The filaments 52 fall downward from the die 80 under the force of gravity into the funnel 74.

The funnel 74 consolidates or groups the filaments 52 into a more compact arrangement in which the filaments bend, curl, or loop and a filament 52 contacts and bonds to at least one other filament 52. The funnel 74 comprises an inlet opening or funnel inlet and an outlet opening or funnel outlet that is smaller than the funnel inlet. Individual separated filaments 52 enter the funnel inlet. The filaments 52 bend, curl, or loop and move into contact as they accumulate. The filaments 52 move through the funnel 74 toward the funnel outlet. Some filaments may slide along the funnel 74 or an intervening sheet that is disposed on the funnel 74 as the filaments move toward the funnel outlet. Bonds are formed between filaments 52 at the points of contact while openings or voids between filaments 52 are present at other locations where one filament 52 does not contact or bond to another filament 52. The entangled and bonded filaments 52 pass through the funnel outlet of the funnel 74 and enter the cooling tank 76. For convenience in reference, the bonded filaments 52 are referred to as a mesh member or filament mesh structure 90.

The cooling tank 76 holds a liquid, such as water or a mixture of water and another fluid. The liquid in the cooling tank 76 helps support the entangled and bonded filaments 52 to limit further compacting or consolidation of the filaments 52 into a less open or less porous arrangement and maintains a desired porosity and density of the filament mesh structure 90. Thus, the liquid provides some buoyancy or resistance that can result in additional bending, curling, or looping of the filaments 52 adjacent to the surface of the liquid or within the funnel 74 to further build the filament mesh structure 90. The liquid also cools the filaments 52 when the filaments 52 are in the liquid. For instance, the liquid cools the filaments 52 from the outside to solidify the filaments 52 and prevent the filaments 52 from bonding at additional locations. At this point, the filaments 52 are relatively stiff and no longer in a plastic state and thus generally maintain a shape and are not moldable or reformable without being reheated.

The material handling subsystem 78 transports the filament mesh structure 90 through the cooling tank 76. The material handling subsystem 78 includes various rollers and conveyors that help move the filament mesh structure 90 through the liquid and out of the liquid. In some configurations, a tractor conveyor 92 is provided in the cooling tank 76 to help pull the filament mesh structure 90 away from the funnel 74 and to counter buoyancy of the filaments 52.

One or more other rollers, such as roller 94, keep the filament mesh structure 90 submerged in the liquid and guide the filament mesh structure 90 through the cooling tank 76. For example, the roller 94 may guide the filament mesh structure 90 toward a conveyor belt 96 and shaker table 98 that are disposed outside of the cooling tank 76. The shaker table 98 shakes the filament mesh structure 90 while it is on the conveyor belt 96 to remove liquid. Alternatively or in addition, the filament mesh structure 90 may be squeezed to remove liquid, air may be blown toward the filament mesh structure 90 to help remove liquid from the filament mesh structure 90, or both. It is also contemplated that the filament mesh structure 90 may also be allowed to drip dry, or dry in ambient air.

The manufacturing system 60 described above is a continuous flow process in which the filament mesh structure 90 is formed as a continuous structure when filament extrusion is not interrupted. Further processing of the filament mesh structure 90 is provided after exiting the cooling tank 76 to cut the filament mesh structure 90 into individual pieces or blanks for individual cushions. Such processing is conducted by a cutting subsystem of the manufacturing system 60. The cutting system may be of any suitable type. For instance, the cutting system may employ a blade, knife, hot knife, saw, fluid jet, or the like to cut the filaments 52 of the filament mesh structure 90 into a blank. The cutting system may be used to shape or contour the blank. It is also contemplated that a blank may be further shaped or contoured with other manufacturing processes, such as molding of the entire blank or a portion thereof.

For clarity and convenience in reference, separate pieces of the filament mesh structure 90 are referred to as a first mesh member 90' and a second mesh member 90" in the discussion below. The first mesh member 90' and the second mesh member 90" may be individual pieces of the filament mesh structure 90 that are cut to a predetermined size or sizes.

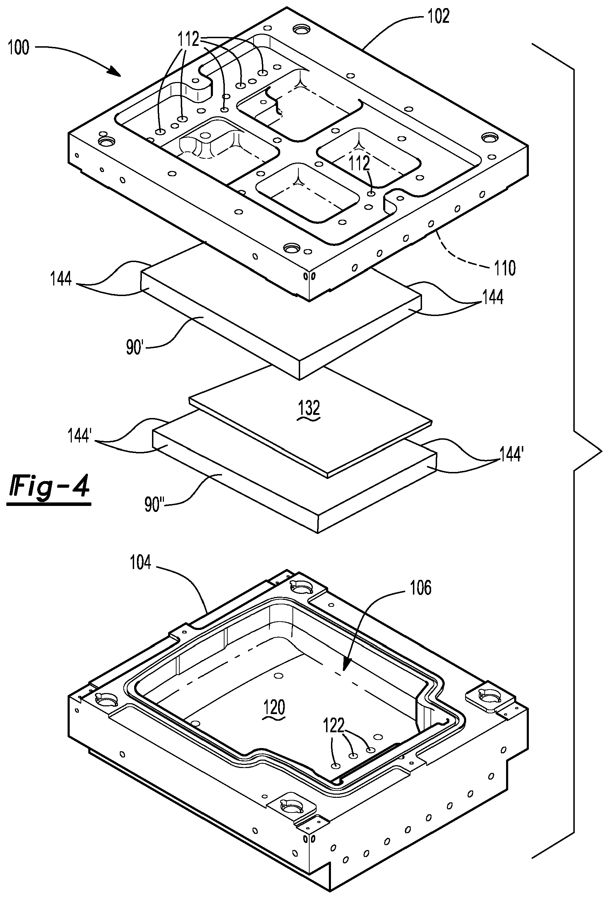

Referring to Figure 4, an example of a mold assembly 100 is shown. The mold assembly 100 may be part of a molding system of the manufacturing system 60. The mold assembly 100 includes a first mold 102 and a second mold 104. The first mold 102 and the second mold 104 cooperate to define a cavity 106 therebetween.

The first mold 102 has a first forming surface 110 that faces toward the first mesh member 90'. The first forming surface 110 defines a portion of the cavity 106 and is configured to contact and shape the first mesh member 90' as will be discussed in more detail below. One or more apertures 112 are provided in the first mold 102. An aperture 112 may extend from the first forming surface 110. The aperture or apertures 112 allow fluid to exit the cavity 106, allow fluid to enter the cavity 106, or both as will be discussed in more detail below.

The second mold 104 has a second forming surface 120 that faces toward the second mesh member 90". The second forming surface 120 defines a portion of the cavity 106 and is configured to contact and shape the second mesh member 90" as will be discussed in more detail below. In some configurations, one or more apertures 122 are provided in the second mold 104. An aperture 122 may extend from the second forming surface 120. If provided, the aperture or apertures 122 allow fluid to exit the cavity 106, allow fluid to enter the cavity 106, or both as will be discussed in more detail below.

In some configurations, an aperture 112, 122 may be selectively fluidly connected to a fluid source, such as a tank, that is disposed outside of the mold assembly 100. For instance, one or more valves may be associated with an aperture 112, 122 and may be opened to allow a fluid to enter the cavity 106 or exit the cavity 106. Thus, fluid may be held in the cavity 106 by closing one or more valves and may be permitted to exit the cavity 106 by opening one or more valves.

The first forming surface 110 and the second forming surface 120 are shaped to mold or form the first and second mesh members 90', 90". For instance, first and second forming surfaces 110, 120 are shaped to form various contours, features, or shapes in the first and second mesh members 90', 90", respectively, such as planar shapes, nonplanar shapes such as concave, convex, or other complex shapes; channels, recesses, protrusions, curves, chamfers, stepped corners, and the like. The cavity 106 may be sized to have a smaller size or volume than the first and second mesh members 90', 90" such that the mold assembly 100 compresses the first and second mesh members 90', 90" when the mold assembly 100 is closed (e.g., when the first mold 102 and second mold 104 are engaged or mated along corresponding mating surfaces that may cooperate to extend around or encircle a corresponding forming surface).

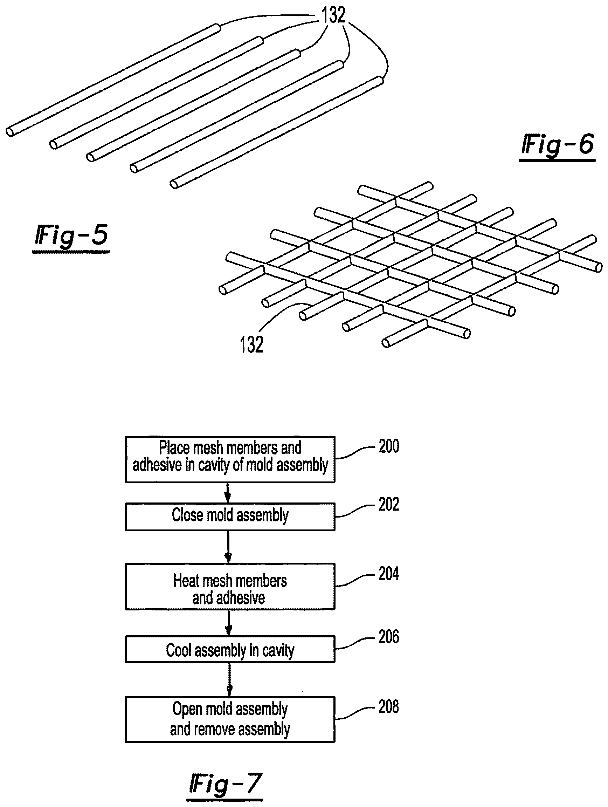

Referring to Figure 7, a flowchart of a method of manufacture of a mesh member assembly 130 is shown. As an overview, a mesh member assembly 130 is an assembly of two or more mesh members, such as first and second mesh members 90', 90", that are attached or joined with an adhesive 132 or adhesive substance. In some configurations, the adhesive 132 is a heat activated adhesive. A heat activated adhesive is a type of adhesive that requires heating to become partially or fully adhesive and able to bond to another material or component surface. For instance, a heat activated adhesive may not bond or adhere to another component or material below an activation temperature. In some configurations, the activation temperature is above ambient air temperature (e.g., above the temperature of atmospheric air in its natural state near the surface of the earth). The adhesive 132 becomes sticky when the activation temperature is reached. For instance, adhesive material or adhesive chemicals of the adhesive 132 are activated once the activation temperature is reached and can then adhere, stick fast to, fuse, or form a bond with another component, such as a mesh member. After the adhesive 132 is heated and activated, the adhesive 132 is allowed to cool below its activation temperature, which allows the adhesive material or adhesive chemicals in the adhesive 132 to harden or crystallize, which increases the strength of the bond.

The adhesive 132 may be made of any suitable material. In some configurations, the adhesive 132 comprises a thermoset material that forms a permanent bond when activated. In some configurations, the adhesive 132 is a thermoplastic material that can be melted and set (e.g., melted and hardened) multiple times.

Referring to Figures 4-6, the adhesive 132 may be provided in any suitable form, such as a film (e.g., a thin flexible sheet that may or may not be air permeable) as shown in Figure 4, a rod (e.g., bar or stick that may or may not have a linear configuration) as shown in Figure 5, or a net or web (e.g., open-meshed material that is twisted, knotted, woven, entangled, or bonded together at discrete or regular intervals) as shown in Figure 6. An example of an adhesive that may be suitable depending on the melting temperature of the filaments of the first and second mesh members 90', 90" is Bostic PO86 polyolefin adhesive having a minimum activation temperature of 96°C, noting an adhesive with a lower minimum activation temperature may be used when the melting temperature of the filaments 52 is lower. An adhesive in rod form may allow the adhesive to be positioned in discrete locations and may allow the adhesive to provide additional stiffening along the axis of the adhesive 132, which may help resist bending. If the adhesive 132 has openings or through holes that are sufficiently large, such as openings between adhesive rods or openings in an adhesive net, then it is contemplated that a filament of one mesh member may pass through the opening and contact or engage a filament of the other mesh member without forming a bond at the point of contact due to the absence of intervening adhesive. An adhesive net may provide more bonding points or bonding points along multiple axes or directions as compared to an adhesive rod. An adhesive sheet may provide a larger surface area and more potential bonding points than a rod or net and, in some cases, may be configurated to resist, limit, or block airflow where present. It is also contemplated that the adhesive 132 may be a powder that is dispensed onto a mesh member.

Method steps are described below in the context of activating the adhesive 132 in the mold assembly 100. For simplicity, the method steps are also described in the context of the adhesive 132 being employed to bond two mesh members (i.e., first and second mesh members 90', 90"); however, it is contemplated that additional mesh members may be provided, that the adhesive 132 may bond or adhere to more than two mesh members, and that adhesive 132 may be provided in multiple locations, multiple layers, or in a stacked arrangement to bond or adhere more than two mesh members. As an example, adhesive 132 may be provided between or sandwiched between first and second mesh members 90', 90" to adhere the first and second mesh members 90', 90" together and additional adhesive 132 may be provided between or sandwiched between the second mesh member 90" and a third mesh member to adhere the second and third mesh members together, and so on. Activating the adhesive 132 in the mold assembly 100 also allows the first and second mesh members 90', 90" to be molded or formed into a desired configuration or shape. As such, method steps are described beginning with two separate pieces of the filament mesh structure 90 (i.e., first and second mesh members 90', 90") that have been cooled and removed from the cooling tank 76 and cut to a desired size.

Three main examples are discussed below. In each configuration, the adhesive 132 adheres to the first mesh member 90' and the second mesh member 90".

In some configurations, the adhesive 132 adheres directly to a filament 52 of a mesh member. For instance, the adhesive 132 may adhere to at least one member of the filaments of the first mesh member 90' (i.e., to at least one member of a first set of filaments of the first mesh member 90'), adhere directly to at least one member of the filaments 52 of the second mesh member 90" (i.e., to at least one member of a second set of filaments of the second mesh member 90"), or both. A configuration in which the adhesive 132 directly adheres to at least one member of the first set of filaments and at least one member of the second set of filaments is shown in Figures 8-11.

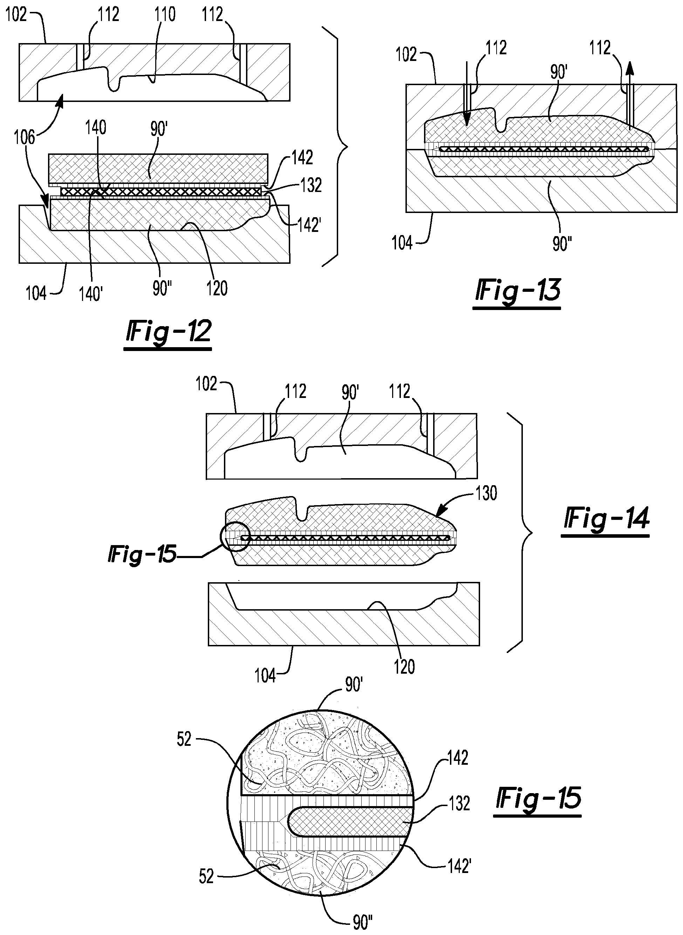

The adhesive 132 adheres to a skin of a mesh member. A mesh member comprises a skin (e.g., thin layer, sheet, membrane, film). The skin may be disposed on or define an exterior side of a mesh member and may be attached (e.g., affixed, fastened, bonded, secured) to one or more filaments 52 of the mesh member. The skin contacts the adhesive 132 and the adhesive 132 is adhered or bonded to the skin. Thus, the adhesive 132 contacts the skin and may not contact one or more filaments 52 of the mesh member due to the intervening skin. A skin is provided with the first mesh member 90' and the second mesh member 90'. As such, the adhesive 132 is adhered to a skin of the first mesh member 90 and a skin of the second mesh member 90'. Referring to Figures 12-15, a configuration is shown in which the first mesh member 90' includes a first side 140 and a first skin 142 that is disposed on the first side 140, and the second mesh member 90" includes a second side 140' and a second skin 142' that is disposed on the second side 140'. The adhesive 132 is adhered to the first skin 142 and the second skin 142'. Providing a skin increases the available surface area to which the adhesive 132 adheres or bonds to, which may provide a stronger overall bond as compared to direct adhesion to filaments 52 due to voids between the filaments 52. In some configurations, the skin completely separates the adhesive 132 from the underlying filaments 52 of the mesh structure having the skin.

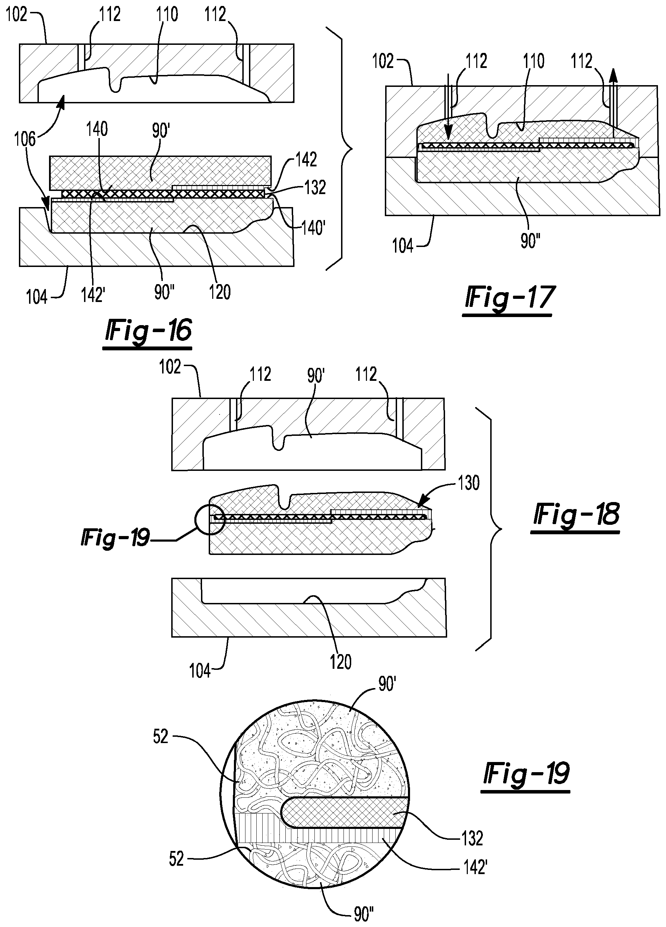

In some configurations, the adhesive 132 adheres to one or more filaments 52 of a mesh member and to a skin of a mesh member. A skin is disposed on an exterior side of a mesh member and the adhesive 132 may contact both the skin of the mesh member and one or more filaments 52 of the mesh member. Referring to Figures 16-19, a configuration is shown in which the first mesh member 90' includes a first skin 142 disposed on a portion of the first side 140 and the second mesh member 90" includes a second skin 142' that is disposed a portion of the second side 140'. The adhesive 132 is adhered to the first skin 142 and to the second skin 142'. The adhesive 132 is also directly adhered to at least one member of the first set of filaments of the first mesh member 90' and at least one member of the second set of filaments of the second mesh member 90" wherein a corresponding skin is not present. Such a configuration may provide a stronger overall adhesive bond where the skin is present but may provide a more breathable structure where the skin is omitted.

In configurations that employ a skin, the skin may be provided when the filament mesh structure 90 is manufactured (e.g., during filament extrusion) or as a secondary operation after the filament mesh structure 90 has exited the cooling tank 76 or has been cut into smaller pieces. In some configurations, it is contemplated that the skin may comprise densely packed filaments 52 that are extruded onto an exterior side of the filament mesh structure 90 after exiting the cooling tank 76 or after cutting.

Referring to Figure 7, at block 200, the first and second mesh members 90', 90" and adhesive 132 are placed in the cavity 106 of the mold assembly 100. Examples of first and second mesh members 90', 90" and adhesive 132 placed in the cavity 106 is shown in Figures 8, 12, and 16. The mesh members and adhesive 132 are placed in the cavity 106 when the mold assembly 100 is open, examples of which are also shown in Figures 8, 12, and 16. The mold assembly 100 is opened by moving at least one of the first mold 102 and the second mold 104 in a manner that permits access to the cavity 106. For instance, the first mold 102 may be disposed above the second mold 104 and may be lifted or pivoted away from the second mold 104 to provide a gap between the first mold 102 and the second mold 104 that is sufficient to permit material to be placed in the cavity 106.

In some configurations, the first and second mesh members 90', 90" and adhesive 132 are arranged or stacked before being placed in the cavity 106. Stacking or arranging before being placed in the cavity 106 may help increase throughput as components may be stacked while the mold assembly 100 is in use. As an example, the adhesive 132 may be positioned on the first mesh member 90' or placed in contact with the first mesh member 90' and then the second mesh member 90" may be placed on the adhesive 132 such that the adhesive 132 is sandwiched between the first mesh member 90' and the second mesh member 90". Then, the stacked arrangement of the first mesh member 90', the adhesive 132, and the second mesh member 90" may be moved together and placed in the cavity 106 between the first mold 102 and the second mold 104.

In some configurations, the first and second mesh members 90', 90" and adhesive 132 are arranged or stacked in the cavity 106. Stacking or arranging in the cavity 106 may reduce or eliminate some material handling steps as compared to stacking or arranging outside the mold assembly 100 in which the stacked arrangement is additionally transported to the mold assembly 100. Stacking or arranging in the cavity 106 may also avoid potential misalignment that may occur during transport of the stacked arrangement to the mold assembly 100. As an example, the first mesh member 90' may be placed in the first mold 102. Next, the adhesive 132 may be positioned on the first mesh member 90' or placed in contact with the first mesh member 90'. Next, the second mesh member 90" may be positioned on the adhesive 132 or placed in contact with the adhesive 132 such that the adhesive 132 is sandwiched between the first mesh member 90' and the second mesh member 90".

It is also contemplated that the first and second mesh members 90', 90" and adhesive 132 may be partially arranged or partially stacked before being positioned in the cavity 106. Partial assembly may reduce or eliminate some material handling steps and improve efficiency.

As an example, the adhesive 132 may be placed on the first mesh member 90' before being placed in the mold assembly 100, then the first mesh member 90' and adhesive 132 may be placed in the mold assembly 100, and then the second mesh member 90" may be positioned on the adhesive 132.

As another example, the first mesh member 90' may be placed in the mold assembly 100, the adhesive 132 may be placed on the second mesh member 90" outside the mold assembly 100, and the adhesive 132 and second mesh member 90" may be moved together to the mold assembly 100 and placed on the first mesh member 90' such that the adhesive 132 is sandwiched between the first mesh member 90' and the second mesh member 90".

Regardless of the sequence or location in which the first mesh member 90', the adhesive 132, and the second mesh member 90" are stacked, the adhesive 132 may be positioned such that the adhesive 132 does not contact or extend to the mold assembly 100. Such positioning helps prevent the adhesive 132 from sticking to or adhering to the mold assembly 100.

As an example, the first mesh member 90' may comprise a first side 140 as previously discussed. The first side 140 may face toward the adhesive 132 and the second mesh member 90". The first side 140 may comprise a first perimeter 144 (e.g., boundary, outer edge) that surrounds (e.g., bounds, encloses. encompasses, circumscribes, delimits, demarcates) the first side 140. In the example in Figure 4, the first perimeter 144 is depicted as being rectangular for simplicity. Similarly, the second mesh member 90' may comprise a second side 140'. The second side 140' may face toward the adhesive 132 and the first side 140. The second side 140' may comprise a second perimeter 144' that surrounds (e.g., bounds, encloses. encompasses, circumscribes, delimits, demarcates) the second side 140'. In the example in Figure 4, the second perimeter 144' is depicted as being rectangular for simplicity. The adhesive 132 is positioned such that the adhesive 132 is spaced apart from and does not extend to the first perimeter 144 and the second perimeter 144'. For instance, a gap may be provided between the first and second perimeters 144, 144' and the adhesive 132. In some configurations, the gap may be 1 mm or more, such as from 2 to 10 mm. A smaller gap may allow the adhesive 132 to extend across a greater area of the first and second sides 140, 140', which in turn may allow the adhesive 132 to adhere or form more bonds as compared to a larger gap.

Independent of the sequence or location in which the first mesh member 90', the adhesive 132, and the second mesh member 90" are stacked, the first mesh member 90' may be aligned with the first forming surface 110 of the first mold 102, thereby permitting the first mesh member 90' to engage or contact the first forming surface 110. Similarly, the second mesh member 90" may be aligned with the second forming surface 120 of the second mold 104, thereby permitting the second mesh member 90" to engage or contact the second forming surface 120 when the mold assembly 100 is closed.

At block 202, the mold assembly 100 is closed. An example of a closed mold assembly 100 is shown in Figures 9, 13, and 17. The mold assembly 100 is closed by moving at least one of the first mold 102 and the second mold 104 so that the first mold 102 and the second mold 104 engage or mate with each other and cooperate to enclose or encompass the cavity 106. The first mesh member 90', the adhesive 132, and the second mesh member 90" are positioned in the cavity 106 between the first mold 102 and the second mold 104, and more specifically between the first forming surface 110 and the second forming surface 120 when the mold assembly 100 is closed. Closing the mold assembly 100 may also compress at least one of the first mesh member 90' and the second mesh member 90" in the cavity 106. Such compression facilitates molding or shaping of a mesh member as is discussed in more detail below.

At block 204, the mesh members and adhesive 132 are heated in the cavity 106. The first and second mesh members 90', 90", and adhesive 132 may be heated in any suitable manner, such as with a fluid that provided to the cavity 106 while the mold assembly 100 is closed. In some configurations, the fluid is a liquid, such as water or a mixture of water and one or more other liquids. In some configurations, the fluid is a gas or gas mixture. For instance, the fluid may be air. In some configurations, the fluid may be provided to the cavity 106 by one or more apertures 112 in the first mold 102, one or more apertures 122 in the second mold 104, or both. An example of this is represented by the straight arrowed line extending through an aperture 122 toward the cavity 106 in Figures 9, 13, and 17. The fluid passes through the voids between the filaments 52 and thus can flow to the adhesive 132 or in close proximity to the adhesive 132 and heat the adhesive 132.

It is also contemplated that in some configurations the mold assembly 100 can be internally heated, such as by circulating heated fluid through passages in the first mold 102, the second mold 104, or both. The passages may not be fluidly connected to the cavity 106. Thus, the heated fluid in the passages heats a corresponding mold, which in turn heats fluid in the cavity 106.

The fluid in the cavity 106 is heated to or provided at a temperature that is greater than or equal to the activation temperature of the adhesive 132. Thus, thermal energy is transmitted from the fluid to the adhesive 132 to activate the adhesive 132. The thermal energy transmitted to the adhesive 132 may at least partially melt the adhesive 132 to facilitate adhesion. For instance, an exterior surface or exterior region of the adhesive 132 near the fluid may melt but an internal core or internal region farther from the exterior surface may not melt. The adhesive 132 may be configured such that a melted or molten region of the adhesive 132 is sufficiently viscous such that the adhesive 132 generally remains in place as opposed to dripping through a mesh member.

The fluid in the cavity 106 may also be heated to or provided at a temperature that allows filaments 52 of a mesh member to be molded or shaped. For instance, the fluid may be heated above a first temperature threshold that is sufficient to heat the filaments 52 to allow the filaments 52 of the first and second mesh members 90', 90" to be reformed or reshaped. More specifically, the thermal energy provided by the fluid heats the filaments 52 to a temperature that allows the filament material to be remolded or reformed to a different shape by the compressive force exerted by the mold assembly 100 against a mesh member therein. As such, the fluid softens the first and second mesh members 90', 90" in the cavity 106 so that the shape of the first and second mesh members 90', 90" conforms to a forming surface, such as the first forming surface 110, the second forming surface 120, or both. The thermal energy provided by the fluid softens or plasticizes the filaments 52 to make the filaments 52 compliant without melting the filaments 52. As used herein, the term "compliant" means that the filament material is in a state (e.g., the material is at a temperature) at which its shape can be permanently changed in the mold assembly 100.

The fluid is provided in a manner that keeps the temperature of the filaments 52 of the first and second mesh members 90', 90" below the melting temperature of the filament material. As an example, the filaments 52 may be heated by the fluid to a temperature that is 5 to 70°C less than the melting temperature of the filament material. Thus, a filament 52 is heated in a manner that is sufficient to allow a filament 52 to be plastically molded or reshaped but that is insufficient to result in a new bond being formed from one filament 52 and another filament 52 or between the filament 52 and itself.

The first temperature threshold may vary based on the filament material employed. As an example, the fluid may be heated to a temperature of around 105°C when filaments 52 are made of linear low-density polyethylene (LLDPE). In some configurations, the minimum activation temperature of the adhesive 132 may be 5 to 50°C less than the melting temperature of the filaments 52. Thus, the first temperature threshold may be a temperature that is greater than or equal to the minimum activation temperature of the adhesive 132 but less than the melting temperature of the filaments 52 to help ensure that the adhesive 132 activates and that the filaments 52 do not melt. Temperature may be monitored or determined using a temperature sensor, such as a thermocouple, thermistor, resistance temperature sensor, semiconductor-based temperature sensor, or the like.

At block 206, the mesh members and adhesive 132 are cooled in the cavity 106 of the mold assembly 100. The mold assembly 100 remains closed during at least a portion of the cooling step. Removing the first and second mesh members 90', 90" from the mold assembly 100 when the filaments 52 are in a compliant, softened state may result in the inadvertent alteration or loss of the conforming shape provided by a forming surface. Thus, the first and second mesh members 90', 90" are cooled in the mold assembly 100 to set the shape of the first and second mesh members 90', 90".

The adhesive 132 is cooled in the cavity 106 to a temperature that is less than its activation temperature so that the adhesive 132 sufficiently hardens to facilitate material handling. For instance, the adhesive 132 may be sufficiently cooled so that the adhesive bonds that were formed during heating are not severed or disrupted during removal from the mold assembly 100 and so that the adhesive 132 does not stick if contacted during material handling. Thus, the cooling fluid may be provided at a temperature less than the activation temperature of the adhesive 132.

In some configurations, the mesh members and adhesive 132 are cooled by providing a cooled fluid to the cavity 106 or circulating a cooled fluid in the cavity 106. The cooling fluid may be a gas, a liquid, or a combination of gas and liquid. A cooling fluid may be provided to and removed from the cavity 106 in the same manner as the heated fluid, such as via one or more apertures 112, 122.

In some configurations, cooling the mesh members and adhesive 132 in the mold assembly 100 includes cooling the mesh members and adhesive 132 with a fluid to at least a second temperature threshold that is less than the first temperature threshold. The second temperature threshold is selected to be any temperature effective to put the filaments of the mesh members into a state in which the molded shape is set and generally retained in the absence of a sufficient compressive force. For example, the second temperature threshold may be below 85°C for linear low-density polyethylene. The mold assembly 100 remains closed during cooling at least until the second temperature threshold is reached.

At block 208, the mold assembly 100 is opened and the resulting mesh member assembly 130 that comprises the first and second mesh members 90', 90" and adhesive 132 that is adhered or bonded to the first and second mesh members 90', 90" is removed from the cavity 106. This is depicted in Figures 10, 14, and 18.

Referring to Figure 11, a magnified view of a portion of the mesh member assembly 130 is shown. As shown in Figure 11, the first mesh member 90' and the second mesh member 90" may contact each other where the adhesive 132 is not present between the end of the adhesive 132 and the adjacent exterior side of the mesh member assembly 130.

The first mesh member 90' and the second mesh member 90" may not contact each other when at least one skin separates the first mesh member 90' and the second mesh member 90". In the configuration shown in Figure 15, the first skin 142 contacts the second skin 142' along the gap or perimeter region where the adhesive 132 is not present between the end of the adhesive 132 and an adjacent exterior side of the mesh member assembly 130. In the configuration shown in Figure 19, the first skin 142 contacts the first mesh member 90' and the second mesh member 90" along the gap or perimeter region where the adhesive 132 is not present.

The mesh member assembly 130 may now be ready for installation in a seat assembly or may undergo further manufacturing steps.

## Claims

1. An assembly (130) comprising:
a first mesh member (90') comprising a first set of filaments (52) of polymeric material, wherein at least two members of the first set of filaments (52) are looped and bonded together;
a second mesh member (90") comprising a second set of filaments (52) of polymeric material, wherein at least two members of the second set of filaments (52) are looped and bonded together; and
an adhesive (132) that is adhered to the first mesh member (90') and the second mesh member (90"),
wherein the first mesh member (90') comprises a first side (140), the second mesh member (90") comprises a second side (140') that faces toward the first side (140), and the adhesive (132) is disposed between the first side (140) and the second side (140'), and
wherein the first mesh member (90') further comprises a first skin (142) disposed on the first side (140) and the adhesive (132) is adhered to the first skin (142), and
wherein the second mesh member (90") further comprises a second skin (142') disposed on the second side (140') and the adhesive (132) is adhered to the second skin (142').

2. The assembly of claim 1 wherein the first side (140) comprises a first perimeter (144) that surrounds the first side (140), the second side (140') comprises a second perimeter (144') that surrounds the second side (140'), and the adhesive (132) is spaced apart from and does not extend to the first perimeter (144) and the second perimeter (144').

3. The assembly of any of the preceding claims, wherein the adhesive (132) is a heat activated adhesive and an activation temperature of the adhesive is less than a melting temperature of the first set of filaments (52) and the second set of filaments (52).

4. The assembly of any of the preceding claims, wherein the adhesive (132) is a rod, a net or a film.

5. A method comprising:
placing a first mesh member (90'), a second mesh member (90"), and an adhesive (132) in a cavity (106) of a mold assembly (100), the first mesh member (90') comprising a first set of filaments (52) of polymeric material, wherein at least two members of the first set of filaments (52) are looped and bonded together, the second mesh member (90") comprising a second set of filaments (52) of polymeric material, wherein at least two members of the second set of filaments are looped and bonded together, and the adhesive (132) is disposed between the first mesh member (90') and the second mesh member (90"); and
heating the first mesh member (90'), the second mesh member (90"), and the adhesive (132) in the cavity (106) of the mold assembly (100), thereby activating the adhesive (132) and adhering the adhesive (132) to the first mesh member (90') and the second mesh member (90"),
wherein placing the first mesh member (90'), the second mesh member (90"), and the adhesive (132) in the cavity (106) of the mold assembly (100) comprises positioning the adhesive (132) in contact with a first skin (142) that is disposed on a first side (140) of the first mesh member (90'), wherein the first skin (142) faces toward the second mesh member (90"), and positioning the adhesive (132) in contact with a second skin (142') that is disposed on a second side (140') of the second mesh member (90"), wherein the second skin (142') faces toward the first skin (142).

6. The method of claim 5, wherein heating the first mesh member (90'), the second mesh member (90"), and the adhesive (132) at least partially melts the adhesive (132) and does not melt the first mesh member (90') and the second mesh member (90").

7. The method of claim 5 or 6, wherein placing the first mesh member (90'), the second mesh member (90"), and the adhesive (132) in the cavity (106) of the mold assembly (100) comprises positioning the adhesive (132) such that the adhesive (132) does not contact the mold assembly (100).

8. The method of any of claims 5 to 7, wherein heating the first mesh member (90') softens the first mesh member (90') and conforms a shape of the first mesh member (90') to a first forming surface (110) of the mold assembly (100).

9. The method of claim 8, further comprising cooling the first mesh member (90'), the second mesh member (90"), and the adhesive (132) in the mold assembly (100) to set the shape of the first mesh member (90') to the first forming surface (110) and harden the adhesive (132).

10. The method of claim 8 or 9, wherein heating the second mesh member (90") softens the second mesh member (90") and conforms a shape of the second mesh member (90") to a second forming surface (120) of the mold assembly (100), and the method further comprises cooling the first mesh member (90'), the second mesh member (90"), and the adhesive (132) in the mold assembly (100) to set the shape of the second mesh member (90") to the second forming surface (120) and harden the adhesive (132).

## Patentansprüche

1. Eine Baugruppe (130), umfassend:
ein erstes Maschenelement (90'), das einen ersten Satz von Filamenten (52) aus polymerem Material umfasst, wobei mindestens zwei Elemente des ersten Satzes von Filamenten (52) geschleift und miteinander verbunden sind;
ein zweites Maschenelement (90''), das einen zweiten Satz von Filamenten (52) aus polymerem Material umfasst, wobei mindestens zwei Elemente des zweiten Satzes von Filamenten (52) geschleift und miteinander verbunden sind; und
einen Klebstoff (132), der an dem ersten Maschenelement (90') und dem zweiten Maschenelement (90'') anhaftet,
wobei das erste Maschenelement (90') eine erste Seite (140) umfasst, das zweite Maschenelement (90'') eine zweite Seite (140') umfasst, die zur ersten Seite (140) weist, und der Klebstoff (132) zwischen der ersten Seite (140) und der zweiten Seite (140') angeordnet ist, und
wobei das erste Maschenelement (90') ferner eine erste Haut (142) umfasst, die auf der ersten Seite (140) angeordnet ist, und der Klebstoff (132) an der ersten Haut (142) anhaftet, und
wobei das zweite Maschenelement (90'') ferner eine zweite Haut (142') umfasst, die auf der zweiten Seite (140') angeordnet ist, und der Klebstoff (132) an der zweiten Haut (142') anhaftet.

2. Die Baugruppe nach Anspruch 1, wobei die erste Seite (140) einen ersten Perimeter (144) umfasst, der die erste Seite (140) umgibt, die zweite Seite (140') einen zweiten Perimeter (144') umfasst, der die zweite Seite (140') umgibt, und der Klebstoff (132) von dem ersten Perimeter (144) und dem zweiten Perimeter (144') beabstandet ist und sich nicht bis zu diesen erstreckt.

3. Die Baugruppe nach einem der vorstehenden Ansprüche, wobei der Klebstoff (132) ein wärmeaktivierter Klebstoff ist und eine Aktivierungstemperatur des Klebstoffs (132) geringer ist als eine Schmelztemperatur des ersten Satzes von Filamenten (52) und des zweiten Satzes von Filamenten (52).

4. Die Baugruppe (130) nach einem der vorstehenden Ansprüche, wobei der Klebstoff (132) ein Stab, ein Netz oder ein Film ist.

5. Ein Verfahren, umfassend:
Platzieren eines ersten Maschenelements (90'), eines zweiten Maschenelements (90'') und eines Klebstoffs (132) in einem Hohlraum (106) einer Formbaugruppe (100), wobei das erste Maschenelement (90') einen ersten Satz von Filamenten (52) aus polymerem Material umfasst, wobei mindestens zwei Elemente des ersten Satzes von Filamenten (52) geschleift und miteinander verbunden sind, wobei das zweite Maschenelement (90'') einen zweiten Satz von Filamenten (52) aus polymerem Material umfasst, wobei mindestens zwei Elemente des zweiten Satzes von Filamenten geschleift sind und miteinander verbunden sind, und der Klebstoff (132) zwischen dem ersten Maschenelement (90') und dem zweiten Maschenelement (90'') angeordnet ist; und
Erwärmen des ersten Maschenelements (90'), des zweiten Maschenelements (90'') und des Klebstoffs (132) in dem Hohlraum (106) der Formbaugruppe (100), wodurch der Klebstoff (132) aktiviert wird und der Klebstoff (132) an dem ersten Maschenelement (90') und dem zweiten Maschenelement (90'') anhaftet,
wobei das Platzieren des ersten Maschenelements (90'), des zweiten Maschenelements (90'') und des Klebstoffs (132) in dem Hohlraum (106) der Formbaugruppe (100) das Positionieren des Klebstoffs (132) in Kontakt mit einer ersten Haut (142), die auf einer ersten Seite (140) des ersten Maschenelements (90') angeordnet ist, wobei die erste Haut (142) zum zweiten Maschenelement (90'') weist, und das Positionieren des Klebstoffs (132) in Kontakt mit einer zweiten Haut (142'), die auf einer zweiten Seite (140') des zweiten Maschenelements (90'') angeordnet ist umfasst, wobei die zweite Haut (142') zur ersten Haut (142) weist.

6. Das Verfahren nach Anspruch 5, wobei das Erwärmen des ersten Maschenelements (90'), des zweiten Maschenelements (90'') und des Klebstoffs (132) den Klebstoff (132) zumindest teilweise schmilzt und das erste Maschenelement (90') und das zweite Maschenelement (90'') nicht schmilzt.

7. Das Verfahren nach Anspruch 5 oder 6, wobei das Platzieren des ersten Maschenelements (90'), des zweiten Maschenelements (90'') und des Klebstoffs (132) in dem Hohlraum (106) der Formbaugruppe (100) das Positionieren des Klebstoffs (132) so umfasst, dass der Klebstoff (132) die Formbaugruppe (100) nicht berührt.

8. Das Verfahren nach einem der Ansprüche 5 bis 7, wobei das Erwärmen des ersten Maschenelements (90') das erste Maschenelement (90') erweicht und eine Form des ersten Maschenelements (90') an eine erste Formfläche (110) der Formbaugruppe (100) anpasst.

9. Das Verfahren nach Anspruch 8, ferner umfassend das Abkühlen des ersten Maschenelements (90'), des zweiten Maschenelements (90'') und des Klebstoffs (132) in der Formbaugruppe (100), um die Form des ersten Maschenelements (90') an die erste Formfläche (110) auszuhärten und den Klebstoff (132) zu härten.

10. Das Verfahren nach Anspruch 8 oder 9, wobei das Erwärmen des zweiten Maschenelements (90'') das zweite Maschenelement (90'') erweicht und eine Form des zweiten Maschenelements (90'') an eine zweite Formfläche (120) der Formbaugruppe (100) anpasst, und das Verfahren ferner das Abkühlen des ersten Maschenelements (90'), des zweiten Maschenelements (90'') und des Klebstoffs (132) in der Formbaugruppe (100) umfasst, um die Form des zweiten Maschenelements (90'') an die zweite Formfläche (120) auszuhärten und den Klebstoff (132) zu härten.

## Revendications

1. Ensemble (130), comprenant :
un premier élément de maille (90') comprenant un premier ensemble de filaments (52) de matériau polymère, dans lequel au moins deux éléments du premier ensemble de filaments (52) sont mis en boucle et liés ensemble ;
un second élément de maille (90") comprenant un second ensemble de filaments (52) de matériau polymère, dans lequel au moins deux éléments du second ensemble de filaments (52) sont mis en boucle et liés ensemble ; et
un adhésif (132) qui est mis en adhérence sur le premier élément de maille (90') et le second élément de maille (90"),
dans lequel le premier élément de maille (90') comprend un premier côté (140), le second élément de maille (90") comprend un second côté (140') qui est orienté vers le premier côté (140), et l'adhésif (132) est disposé entre le premier côté (140) et le second côté (140'), et
dans lequel le premier élément de maille (90') comprend en outre une première peau (142) disposée sur le premier côté (140) et l'adhésif (132) est mis en adhérence sur la première peau (142), et
dans lequel le second élément de maille (90") comprend en outre une seconde peau (142') disposée sur le second côté (140') et l'adhésif (132) est mis en adhérence sur la seconde peau (142').

2. Ensemble selon la revendication 1, dans lequel le premier côté (140) comprend un premier périmètre (144) qui entoure le premier côté (140), le second côté (140') comprend un second périmètre (144') qui entoure le second côté (140'), et l'adhésif (132) est espacé du premier périmètre (144) et du second périmètre (144') et ne s'étend pas vers ceux-ci.

3. Ensemble selon l'une quelconque des revendications précédentes, dans lequel l'adhésif (132) est un adhésif activé par la chaleur et une température d'activation de l'adhésif est inférieure à une température de fusion du premier ensemble de filaments (52) et du second ensemble de filaments (52).

4. Ensemble selon l'une quelconque des revendications précédentes, dans lequel l'adhésif (132) est une tige, un filet ou un film.

5. Procédé, comprenant les étapes consistant à :
mettre en place un premier élément de maille (90'), un second élément de maille (90") et un adhésif (132) dans une cavité (106) d'un ensemble de moule (100), le premier élément de maille (90') comprenant un premier ensemble de filaments (52) de matériau polymère, dans lequel au moins deux éléments du premier ensemble de filaments (52) sont mis en boucle et liés ensemble, le second élément de maille (90") comprenant un second ensemble de filaments (52) de matériau polymère, dans lequel au moins deux éléments du second ensemble de filaments sont mis en boucle et liés ensemble, et l'adhésif (132) est disposé entre le premier élément de maille (90') et le second élément de maille (90") ; et
chauffer le premier élément de maille (90'), le second élément de maille (90") et l'adhésif (132) dans la cavité (106) de l'ensemble de moule (100), en activant ainsi l'adhésif (132) et en mettant l'adhésif (132) en adhérence sur le premier élément de maille (90') et le second élément de maille (90"),
dans lequel la mise en place du premier élément de maille (90'), du second élément de maille (90") et de l'adhésif (132) dans la cavité (106) de l'ensemble de moule (100) comprend un positionnement de l'adhésif (132) en contact avec une première peau (142) qui est disposée sur un premier côté (140) du premier élément de maille (90'), dans lequel la première peau (142) est orientée vers le second élément de maille (90"), et un positionnement de l'adhésif (132) en contact avec une seconde peau (142') qui est disposée sur un second côté (140') du second élément de maille (90"), dans lequel la seconde peau (142') est orientée vers la première peau (142).

6. Procédé selon la revendication 5, dans lequel le chauffage du premier élément de maille (90'), du second élément de maille (90") et de l'adhésif (132) fait fondre au moins partiellement l'adhésif (132) et ne fait pas fondre le premier élément de maille (90') ni le second élément de maille (90").

7. Procédé selon la revendication 5 ou 6, dans lequel la mise en place du premier élément de maille (90'), du second élément de maille (90") et de l'adhésif (132) dans la cavité (106) de l'ensemble de moule (100) comprend un positionnement de l'adhésif (132) de telle sorte que l'adhésif (132) ne soit pas en contact avec l'ensemble de moule (100).

8. Procédé selon l'une quelconque des revendications 5 à 7, dans lequel le chauffage du premier élément de maille (90') ramollit le premier élément de maille (90') et conforme une forme du premier élément de maille (90') à une première surface de formage (110) de l'ensemble de moule (100).

9. Procédé selon la revendication 8, comprenant en outre un refroidissement du premier élément de maille (90'), du second élément de maille (90") et de l'adhésif (132) dans l'ensemble de moule (100) pour définir la forme du premier élément de maille (90') par rapport à la première surface de formage (110) et faire durcir l'adhésif (132).

10. Procédé selon la revendication 8 ou 9, dans lequel le chauffage du second élément de maille (90") ramollit le second élément de maille (90") et conforme une forme du second élément de maille (90") à une seconde surface de formage (120) de l'ensemble de moule (100), et le procédé comprend en outre un refroidissement du premier élément de maille (90'), du second élément de maille (90") et de l'adhésif (132) dans l'ensemble de moule (100) pour définir la forme du second élément de maille (90") par rapport à la seconde surface de formage (120) et faire durcir l'adhésif (132).
